# EUROPEAN PATENT SPECIFICATION

(11) **EP 0 848 217 B1**
(45) Date of publication and mention of the grant of the patent: **26.09.2001**
(21) Application number: 97120953.1
(22) Date of filing: 28.11.1997
(51) Int. Cl.: F25D 23/00, F25D 21/14, F16K 17/194

(54) **Cooling apparatus with pressure-equalizing device**
Kältegerät mit Druckausgleichsvorrichtung
Appareil de réfrigération muni d'un dispositif d'équilibrage de pression

(30) Priority: 11.12.1996 SI 9600364
(43) Date of publication of application: 17.06.1998
(73) Proprietor: Gorenje Gospodinjski aparati d.d., 3503 Velenje (SI)
(72) Inventor: Merva, Drago, 3320 Velenje (SI); Vrhovnik, Gorazd, 3320 Velenje (SI)
(74) Representative: Viering, Jentschura & Partner

(56) References cited:
- DE-A- 2 453 670
- DE-C- 400 489
- DE-U- 8 915 096
- FR-A- 2 391 435
- US-A- 2 117 389
- US-A- 2 582 031
- US-A- 2 627 278
- US-A- 2 724 241
- US-A- 3 696 632
- US-A- 3 970 098

## Description

The present invention relates to a cooling apparatus according to the preamble of claim 1.

Such an appartus is known, for example, from DE-U- 8 915 096.

Recent developments of deep-freezing apparatus have strongly increased the sealing quality between the door and the housing of said apparatus. However, such good sealing also has a drawback. Namely, when the door of said apparatus has once been opened, fresh air rushes in and the temperature of fresh air is usually remarkably higher than the temperature in the interior of a deep-freezing apparatus. With the door shut again, the air in the interior of said apparatus cools isochorically, which results in the lowering of the pressure inside the apparatus itself. With time the pressure inside the deep-freezing apparatus practically equalizes with the pressure of the ambient, yet a problem arises when the door of said apparatus is to be opened again relatively soon after having been closed. Then a relatively strong force is needed to open the door.

To solve this problem different manufacturers use different solutions. There is a solution, for example, where the actuation of a handle for opening the door of a deep-freezing apparatus is at the same time the actuation of the sealing between the door and the housing in the sense of creating an intentional gap through which the pressure inside the apparatus equalizes with the ambient pressure. An alternative solution includes either hand or foot operated opening via leverage provided in the handle. Yet another solution anticipates the use of a membrane valve requiring an additional intervention to incorporate said valve into the door or housing of a deep-freezing apparatus. One of the known solutions suggests installation of a valve that can be actuated by means of a knob, still another solution suggests actuating a small pump to increase the pressure level in said apparatus. A solution in which a gap is permanently maintained in the sealing area by means of a so called decompression plate is also known.

Further, in German utility model DE 89 15 096, for the mentioned equalizing of pressure a stopping element (plug) is positioned in an existing hole in the bottom of the deep-freezing apparatus, said hole being foreseen as an outlet of water at defrosting said apparatus. The stopping element (plug) is vertically movable and formed in such a manner that, with its one part, it tightly rests on a corresponding part of said hole, whereby it acts as a check valve that, at a pressure drop in the interior of the deep-freezing apparatus with regard to the ambient pressure, automatically opens and equalizes both pressures. The seat of the stopping element (plug) in the hole is arranged on the lower (warmer) side of the apparatus bottom in order to prevent the freezing of the plug to the seat. Since in this place the arranged seat and plug are warmed to ambient temperature, at the equalizing of pressure the plug lifts above the seat and admits the outer air into the interior of the apparatus. A danger exists that at opening the apparatus door the check valve immediately opens at such pressure difference that it drives the plug, preferably a ball, under the upper movement limiter of the stopping element (plug). Since this limiter is arranged in the interior i.e. on the cold side of the apparatus bottom, it often happens that the stopping element gets steamed up by condensation separating from the ambient warmer air penetrating into the interior. The condensation on the stopping element (plug) leads to this element being frozen in the upper position, which means a continuous penetration of the warmer air into the apparatus resulting in an increased energy consumption.

All the known solutions have serious disadvantages. Thus, some of them are not suitable to be used in e.g. deep-freezing apparatus intended to be incorporated into kitchen units. Some other again comprise relatively complicated mechanisms or are conceived with a permanent gap resulting in permanent air flow and, therefore, warming the interior of said apparatus.

The aim of the present invention is to create such a device in the cooling apparatus that will equalize the pressure between the interior of the cooling apparatus and the surrounding atmosphere and make possible an automatic outflow of the liquid, especially of water forming at defrosting, from the interior of the cooling apparatus, which will be simple and will lack the disadvantages of the known solutions.

According to the invention the set task is solved by a cooling apparatus as defined in claim 1.

In said through hole provided in the bottom of the apparatus there is arranged a vertically movable plug conceived so as to tightly rest with one of its portions against one of the respective portions of the through hole. A lift is limited by a stick like protrusion provided on a cover of the through hole and projecting into the same.

It proved useful that those portions of the plug and the through hole that tightly fit are provided with tapered congruent surfaces.

The plug of the device according to the invention is made of a light material facilitating buoyant force exerted onto the plug either by the air entering said device or by the water exiting from said device. According to one embodiment the plug on the periphery of the free side of its upper portion is provided with a radial extension comprising on its outer edge an axially running projection facing the lower portion. Between said projection, the radial extension and the upper portion an air chamber is built thus facilitating the buoyant effect in the water.

An alternative embodiment anticipates that on its upper portion the plug be provided with a number of radially projecting and circumferentially equidistant wings. The latter prevent the plug from resting in the upper position thus disabling adherence of the plug due to surface tension.

The invention is further described in more detail on the basis of the preferred embodiments, reference being made to the accompanying drawings, in which
- Fig. 1: shows a longitudinal section of a pressure-equalizing device according to the invention built into the bottom of e.g. a deep-freezing apparatus;
- Fig. 2: shows another embodiment of a sealing plug of a device of Fig. 1; and
- Fig. 3: shows yet another embodiment of a sealing plug of a device of Fig. 1.

The bottom 1 of a deep-freezing apparatus for instance is formed with a through hole 2 in which is arranged a sealing plug 3. In the interior of said apparatus the bottom 1 is provided with a surface 4 running towards the hole 2. The hole 2 is covered in a manner *known per se* from the side of the surface 4, i.e. from the inside of said apparatus, with at least one meshed cover 5 comprising, for instance, a number of concentrically arranged through holes 6 and a stick like protrusion 5'. On the other side the through hole is connected with the ambient.

The through hole 2 essentially comprises three portions; the first, upper portion 7, the second, intermediate portion 8, and the third, lower portion 9. The upper portion 7 and the lower portion 9 are formed as coaxial cylinders, the upper portion 7 having a relatively larger diameter than the lower portion 9. Both portions 7, 9 are joined by means of an intermediate portion 8 being formed as an upside down set frustum.

The plug 3 is arranged in the through hole 2 in a manner that it can easily perform vertical movement. In the basic position the plug 3 rests with a suitably formed surface onto the surface of the intermediate portion 8 of the through hole 2 forcing the latter to be closed; the flow of the air is prevented. The plug 3 can either be hollow or massive and as such comprises three portions: the upper, cylindrical portion 10, the intermediate, conical portion 11 and the lower portion 12 that could either be cylindrical or conical. Both the upper portion 10 and the lower portion 12 of the plug 3 are formed with essentially smaller diameters than the upper portion 7 and the lower portion 9 of the through hole 2 to move easily in the latter.

The plug 3 is on its upper side i.e on the side facing the cover 5, formed with a spherical indentation 13 intended for co-operation with the stick like protrusion 5'. When isochoric undercooling of the air and therefore pressure drop in the deep-freezing apparatus emerge due to its door having been opened, the outside air pressure pushes the plug 3 arranged in the through hole 2 vertically in order for the ambient air to enter the interior of said apparatus resulting in equalization of the outside pressure with the pressure inside said apparatus. Entering the stick like protrusion 5' into the spherical indentation 13 prevents an excessive shift of the plug 3 in vertical direction which could cause the lower portion 12 of the plug 3 to fall out of the lower portion 9 of the through hole 2 and thus the interruption of shifting of the plug 3 in the through hole 2.

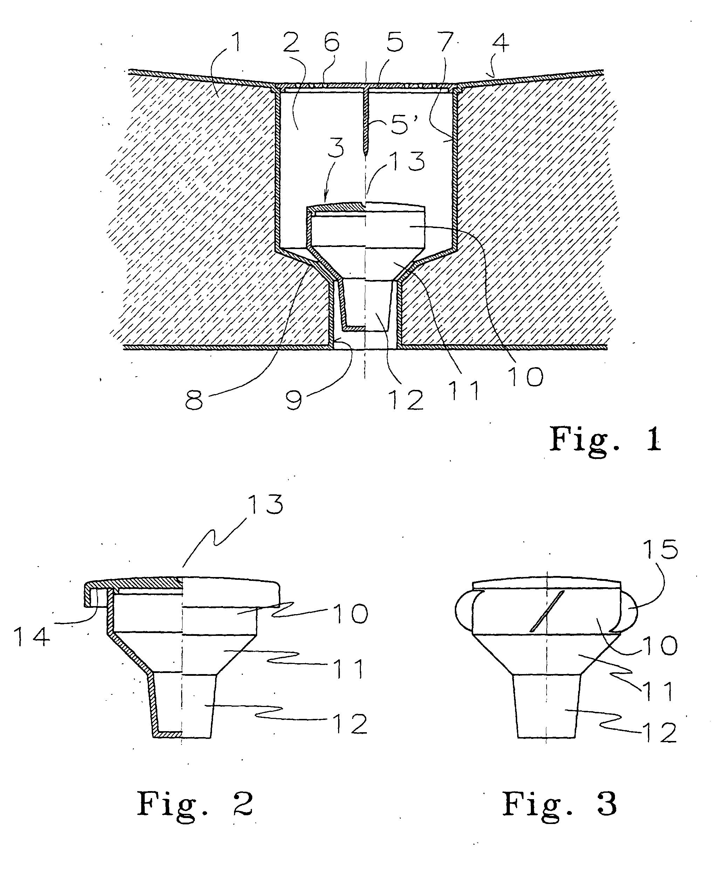

The plug 3 is made of a light material, e.g. polystyrene foam to be easily moved by air flow. In addition to the embodiment of Fig. 1 the plug 3 can, on the side facing the cover 5 on its periphery, be provided with a radial extension 14 (Fig. 2) comprising on its outer edge an axially running projection facing the lower portion. Between said projection, the radial extension 14 and the upper portion 10 an air chamber forms which facilitates the buoyant effect in the water.

An alternative embodiment of the plug 3 (Fig. 3) foresees the plug 3 to be on its upper portion provided with a series of radially projecting wings 15 equidistantly arranged on the periphery of the plug 3. The wings prevent the plug 3 to rest in the upper position and render adhering of the plug 3 impossible due to the surface tension of the water.

It is useful and advantageous for the through hole 2 intended as a hole for pressure equalization to be simultaneously foreseen as a drainhole for the water emerging from thawing a deep-freezing apparatus. The water collects in the upper portion 7 of the through hole 2 and at sufficient quantity thereof fluid buoyance lifts the plug 3 from the sealing position thus freeing the hole 2 and enabling the drainage of the water from said apparatus.

As already mentioned the through hole 2 is closed in a manner known *per se* by means of a meshed cover 5, the task of which is to prevent dirt to enter the hole 2 which could cause same to become blocked up. The through holes 6 on the cover 5 are conically widened in the direction away from the hole 2 to allow warm air that is sucked by vacuum into the interior of the deep-freezing apparatus to blow away and to thaw possible ice particles that would have collected on the holes 6 of the cover 5.

## Claims

1. Cooling apparatus, particularly a deep-freezing apparatus, in whose bottom (1) a through hole (2), preferably as an outlet of liquid, especially water formed at defrosting, is arranged and in said hole (2) a vertically movable sealing plug (3) as a pressure-equalizing device for equalizing the pressure between the interior of the cooling apparatus and the surrounding atmosphere is arranged, the plug (3) being formed in such a manner that with one of its portions it tightly rests against a corresponding portion of the through hole (2), **characterized in that** the through hole (2) is formed of three coaxially arranged portions, namely an upper portion (7) and a lower portion (9) shaped as cylinders, the diameter of the upper portion (7) being greater than the diameter of the lower portion (9) and the portions (7, 9) being joined by an intermediate portion (8) preferably formed as a truncated cone, the upper portion (7) is provided with at least one meshed cover (5), on the lower side of which a protrusion (5') projecting into the hole (2) is arranged for limiting the shift of the plug, and the sealing plug (3) provided in the hole (2) comprises three portions, namely a cylindrical upper portion (10), a preferably conical intermediate portion (11), and a lower portion (12), which is cylindrical or conical.

2. A device according to claim 1, **characterized in that** the plug (3) on the periphery of the free side of its upper portion (10) is provided with a radial projection (14).

3. A device according to claim 1, **characterized in that** the plug (3) on its upper portion (10) is provided with a number of radially projecting and circumferentially equidistant wings (15).

4. A device according to claim 1 **characterized in that** the plug (3) with the conical intermediate portion (11) tightly rests onto the conical intermediate portion (8) of the through hole (2).

## Patentansprüche

1. Kühlgerät, insbesondere Tiefkühlgerät, an dessen Boden
(1) ein Durchangangsloch (2), vorzugsweise als Ausgang für Flüssigkeit, vor allem von Abtauwasser, vorgesehen ist, wobei in dem Loch (2) ein vertikal beweglicher Dichtungsstöpsel (3) vorgesehen ist als Druckausgleichsvorrichtung, um den Druck zwischen dem Inneren des Kühlgeräts und der Umgebung auszugleichen, wobei der Stöpsel (3) derart ausgebildet ist, daß er mit einem seiner Abschnitte dicht an einem entsprechenden Abschnitt des Durchgangslochs (2) aufsitzt, **dadurch gekennzeichnet, daß** das Durchgangsloch (2) aus den drei koaxial angeordneten
Abschnitten gebildet wird, nämlich aus einem oberen Abschnitt (7) und einem unteren Abschnitt (9) in Zylinderform, wobei der Durchmesser des oberen Abschnitts (7) größer ist als der Durchmesser des unteren Abschnitts (9), und wobei die Abschnitte (7, 9) verbunden sind durch einen Zwischenabschnitt (8), der bevorzugt als Kegelstumpf ausgebildet ist, wobei der obere Abschnitt (7) mit mindestens einer maschenartigen Hülle (5) ausgestattet ist, an deren unterer Seite ein Vorsprung (5'), welcher in das Loch (2) hineinragt, vorgesehen ist, um die Bewegung des Stöpsels zu begrenzen, und wobei der Dichtungsstöpsel (3), der in dem Loch (2) vorgesehen ist, drei Abschnitte umfaßt, nämlich einen zylindrischen oberen Abschnitt (10), einen bevorzugt konischen Zwischenabschnitt (11), und einen unteren Abschnitt (12), der zylindrisch oder konisch ist.

2. Vorrichtung gemäß Anspruch 1, **dadurch gekennzeichnet, daß** der Stöpsel (3) am Rand der freien Seite seines oberen Abschnitts (10) mit einem radialen Vorsprung (14) ausgestattet ist.

3. Vorrichtung gemäß Anspruch 1, **dadurch gekennzeichnet, daß** der Stöpsel (3) an seinem oberen Abschnitt (10) mit einer Anzahl von radial vorstehenden und am Umfang in gleichen Abständen voneinander stehenden Flügeln (15) ausgestattet ist.

4. Vorrichtung gemäß Anspruch 1, **dadurch gekennzeichnet, daß** der Stöpsel (3) mit dem konischen Zwischenabschnitt (11) dicht auf dem konischen Zwischenabschnitt (8) des Durchgangslochs (2) aufliegt.

## Revendications

1. Appareil de refroidissement, en particulier appareil de surgélation, dans la base (1) duquel est agencé un trou de passage (2), de préférence comme sortie de liquide, en particulier de l'eau formée lors du dégivrage, et dans ledit trou (2) est agencé un bouchon de fermeture (3) apte à se déplacer verticalement, servant de dispositif d'égalisation de pression pour égaliser la pression entre l'intérieur de l'appareil de refroidissement et l'atmosphère environnante, le bouchon (3) étant configuré de telle sorte que grâce à l'une de ses parties, il repose étroitement contre une partie correspondante du trou de passage (2), **caractérisé en ce que** le trou de passage (2) est formé de trois parties agencées coaxialement, à savoir une partie supérieure (7) et une partie inférieure (9) configurées comme cylindres, le diamètre de la partie supérieure (7) étant plus grand que le diamètre de la partie inférieure (9), et les parties (7, 9) étant reliées par une partie intermédiaire (8) de préférence configurée comme cône tronqué, la partie supérieure (7) est dotée d'au moins un couvercle (5) en treillis, sur le côté inférieur duquel est agencé une saillie (5') débordant dans le trou (2) pour limiter le déplacement du bouchon, et le bouchon de fermeture (3) prévu dans le trou (2) comprend trois parties, à savoir une partie supérieure (10) cylindrique, une partie intermédiaire (11) de préférence conique et une partie inférieure (12) qui est cylindrique ou conique.

2. Dispositif selon la revendication 1, **caractérisé en ce que** le bouchon (3) est doté à la périphérie du côté libre de sa partie supérieure (10) d'une saillie radiale (14).

3. Dispositif selon la revendication 1, **caractérisé en ce que** le bouchon (3) est doté sur sa partie supérieure (10) d'un certain nombre d'ailes (15) débordant radialement et équidistantes vis-à-vis de la circonférence.

4. Dispositif selon la revendication 1, **caractérisé en ce que** le bouchon (3) repose de façon hermétique grâce à sa partie intermédiaire conique (11) sur la partie intermédiaire conique (8) du trou de passage (2).
